# EUROPEAN PATENT SPECIFICATION

(11) **EP 3 290 877 B1**
(45) Date of publication and mention of the grant of the patent: **14.04.2021**
(21) Application number: 17188703.7
(22) Date of filing: 31.08.2017
(51) Int. Cl.: D06F 39/08, G01F 23/14, G01F 23/16, G01L 19/00, G01L 19/14

(54) **SENSOR ASSEMBLY AND LIQUID LEVEL DETECTION DEVICE**
SENSORANORDNUNG UND FLÜSSIGKEITSPEGELDETEKTIONSVORRICHTUNG
ENSEMBLE CAPTEUR ET DISPOSITIF DE DÉTECTION DE NIVEAU DE LIQUIDE

(30) Priority: 05.09.2016 CN 201621037810 U
(43) Date of publication of application: 07.03.2018
(73) Proprietor: Tyco Electronics (Shanghai) Co., Ltd., China (Shanghai) Pilot Free Trade Zone Shanghai (CN)
(72) Inventor: PAN, Lei, Shanghai, Shanghai (CN); RAJENDRA, Pai, Shanghai, Shanghai (CN); DING, Tongbao, Shanghai, Shanghai (CN); LI, Weiguo, Shanghai, Shanghai (CN)
(74) Representative: Grünecker Patent- und Rechtsanwälte PartG mbB

(56) References cited:
- FR-A1- 2 714 728
- KR-A- 20150 031 079
- KR-B1- 101 447 195
- KR-B1- 101 471 942
- US-A- 4 809 536
- US-A1- 2013 220 022

## Description

### FIELD OF THE INVENTION

Embodiments of the present disclosure relate to a liquid level detection device, and more particularly, to a liquid level detection device for a washing machine and a sensor assembly for the liquid level detection device.

### BACKGROUND OF THE INVENTION

There is demand in equipment such as a washing machine for mounting a liquid level sensor to measure liquid level in the equipment. Generally, hydraulic pressure in cylinder of the washing machine is converted to a gas pressure variation by an air chamber and a pressure transmitting tube communicated with the air chamber, and then the gas pressure variation is transmitted to a pressure sensor by the pressure transmitting tube. The pressure sensor generates variable electrical signal on the basis of the input pressure to obtain the liquid level information in the cylinder.

In the relevant art, once that the pressure sensor is mounted, when maintaining and replacing the pressure sensor, it is inconvenient to disassemble an old pressure senor or replace a new pressure sensor. Moreover, it is not easy to perform an operation of installing the pressure sensor in the equipment, and the installed pressure sensor is easy to shake.

Document KR 101 447 195 B1 discloses a pressure sensor assembly for a washing machine comprising a T-shaped housing which comprises a piezoelectric sensor and an electrical interface for electrically connecting the piezoelectric sensor. US 2013/220 022

A1 discloses a pressure sensor for a washing machine with a mounting portion comprising deflectable wings for inserting into a support structure, which is engaged with steps on each wing of the mounting portion. In KR 2015 0 031 079 A, a washing machine is disclosed, which comprises a piezoelectric pressure sensor.

### SUMMARY OF THE INVENTION

Embodiments of the present disclosure provides a sensor assembly and a liquid level detection device, capable of being stably mounted on a support frame, and easily installing and detaching the sensor assembly.

According to an embodiment of one aspect of the present disclosure, there is provided a sensor assembly, comprising a housing; a pressure interface provided on the housing and communicated with a pressure transmission tube; a piezoelectric sensor provided in the housing and constructed to sense a pressure inputted from the pressure interface; a mechanical interface provided at one side of the housing and detachably engaged with a mounting mechanism; and an electrical interface provided at the other side of the housing and constructed to be electrically connected with a mating electrical interface in a plug manner, wherein the sensor assembly further includes a cover covering the housing.

According to a sensor assembly of an embodiment of the present disclosure, the mechanical interface comprises a plug portion extending from the housing; and at least one limiting portion provided on the plug portion to prevent the mechanical interface from being disengaged from the mounting mechanism when the mechanical interface is engaged with the mounting mechanism.

According to a sensor assembly of an embodiment of the present disclosure, an end of the plug portion is formed with a plurality of first cantilevers separated from each other, the limiting portions being provided on the first cantilevers, respectively.

According to a sensor assembly of an embodiment of the present disclosure, the electrical interface includes a socket portion extending from a side of the housing opposite to the mechanical interface; and a plurality of connection terminals each having one end passing through the housing and electrically connected to the piezoelectric sensor, and the other end suspending in the socket portion to be electrically connected with a mating connection terminal of the mating electrical interface inserted into the socket portion.

According to a sensor assembly of an embodiment of the present disclosure, the piezoelectric sensor includes a printed circuit board electrically connected with the connection terminal, the pressure inputted from the pressure interface being acted on the printed circuit board; and a semiconductor strain gauge provided on the printed circuit board, of which a resistance value is varied with the pressure inputted from the pressure interface.

According to a sensor assembly of an embodiment of the present disclosure, the semiconductor strain gauge is electrically connected to a bridge arm of Wheatstone bridge.

According to an embodiment of a further aspect of the present disclosure, there is provided a liquid level detection device including a sensor assembly and a mounting mechanism. The sensor assembly includes a housing; a pressure interface provided on the housing and communicated with a pressure transmission tube; a piezoelectric sensor provided in the housing and constructed to sense a pressure inputted from the pressure interface; a mechanical interface provided at one side of the housing; and an electrical interface provided at the other side of the housing and constructed to be electrically connected to a mating electrical interface in a plug manner. The mounting mechanism includes a mounting portion constructed to be detachably mounted on a support frame; and a mating interface provided on the mounting portion and constructed to be detachably engaged with the mechanical interface.

According to a liquid level detection device of an embodiment of the present disclosure, the liquid level detection device further includes a pressure transmitting tube having one end communicated with a container receiving liquid to be measured, and the other end communicated with the pressure interface, so that the pressure in the pressure transmitting tube is varied with the liquid level of the liquid to be measured.

According to a liquid level detection device of an embodiment of the present disclosure, the mechanical interface comprises a plug portion extending from the housing and constructed to be inserted into the mating interface; and at least one limiting portion provided on the plug portion and constructed to be engaged with a mating limiting portion provided in the mating interface when the mechanical interface is engaged with the mounting mechanism, to prevent the mechanical interface from being disengaged from the mounting mechanism.

According to a liquid level detection device of an embodiment of the present disclosure, one of the limiting portion and the mating limiting portion is a protrusion, and the other one of the limiting portion and the mating limiting portion is a groove mating with the protrusion.

According to a liquid level detection device of an embodiment of the present disclosure, an end of the plug portion is formed with a plurality of first cantilevers separated from each other, the limiting portions being provided on the first cantilevers, respectively.

According to a liquid level detection device of an embodiment of the present disclosure, the mounting portion includes an insertion portion constructed to pass through the mounting through hole formed on the support frame; at least one holder extending outwardly radically from laterals of the mating interface, to be in contact with a surface around the mounting through hole on the front of the support frame; and at least one locking portion provided on the insertion portion and constructed to, under contraction, pass through the mounting through hole together with the insertion portion, and under expansion, allow at least one part of the locking portion to extend onto an edge of the mounting through hole on the back of the support frame.

According to a liquid level detection device of an embodiment of the present disclosure, each of the locking portions includes a second cantilever obliquely extending toward the support frame from an end of the insertion portion; and a protrusion portion provided on the second cantilever, and constructed to, under contraction passes through the mounting through hole together with the second cantilever, and under expansion extends onto the edge of the mounting through hole on the back of the support frame, such that the support frame is sandwiched between the holder and the protrusion portion .

According to a liquid level detection device of an embodiment of the present disclosure, the holder obliquely extends toward the support frame with respect to the mating interface, to be in resilient contact with the surface around the mounting through hole.

According to a liquid level detection device of an embodiment of the present disclosure, the mating interface is provided with at least one support portion abutting against the front of the holder to avoid the holder having excessive deformation.

### BRIEF DESCRIPTION OF THE DRAWINGS

The above and other features of the present invention will become more apparent by describing in detail exemplary embodiments thereof with reference to the accompanying drawings,, in which:
Fig.1 shows a schematic exploded view of a liquid level detection device according to an exemplary embodiment of the present disclosure;
Fig.2 is a schematic view showing the principle for measuring liquid level by the liquid level detection device as shown in Fig. 1;
Fig.3 shows a schematic perspective view of the sensor assembly as shown in Fig. 1;
Fig.4 shows a sectional perspective view of a mounting mechanism according to an exemplary embodiment of the present disclosure;
Fig.5 shows a side view of the liquid level detection device as shown in Fig. 1;
Fig. 6 shows a longitudinal sectional view of the liquid level detection device as shown in Fig. 1; and
Fig. 7 shows a bottom view of the liquid level detection device as shown in Fig. 1.

### DETAILED DESCRIPTION OF PREFERRED EMBODIMENTS OF THE INVENTION

Although the present disclosure will be fully described with reference to the drawings including preferred embodiments of the present disclosure, before the description, it is to be appreciated that a person skilled in the art can modify the disclosure described hereinafter and achieve the technical effect of the disclosure. Therefore, it should be appreciated that the above description above is a general disclosure for those skilled in the art and the content thereof is not intended to limit the exemplary embodiments described in the present disclosure.

In addition, in the following detailed description, for easy to explain, many specific details are set forth to provide a comprehensive understanding of the embodiments disclosed in the present disclosure. However, one or more embodiment can be obviously practiced without these specific details. In other instances, well-known structures and devices are illustrated to simplify the drawings.

According to a general technical concept of the present disclosure, there is provided a liquid level detection device including a sensor assembly and a mounting mechanism. The sensor assembly includes a housing; a pressure interface provided on the housing and communicated with a pressure transmission tube; a piezoelectric sensor provided in the housing and constructed to sense a pressure inputted from the pressure interface; a mechanical interface provided at one side of the housing; and an electrical interface provided at the other side of the housing and constructed to be electrically connected to a mating electrical interface in a plug manner, wherein the sensor assembly further comprises a cover covering the housing. The mounting mechanism includes a mounting portion constructed to be detachably mounted on a support frame; and a mating interface provided on the mounting portion and constructed to be detachably engaged with the mechanical interface.

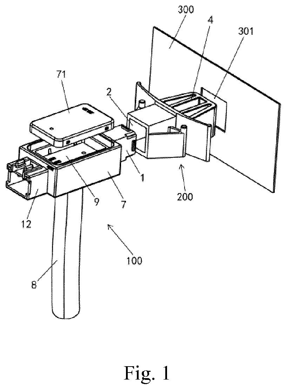

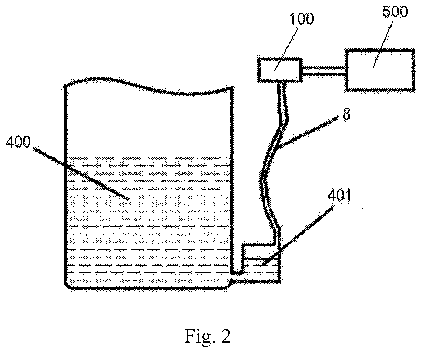

As shown in Figs. 1-5, a liquid level detection device according to an exemplary embodiment of the present disclosure is used for detecting liquid level in an electrical equipment, such as a washing machine, and mounted on a support frame 300 including a mounting through hole 301. The liquid level detection device includes a sensor assembly 100 and a mounting mechanism 200 for mounting the sensor assembly 100.

As shown in Figs. 1-7, the sensor assembly 100 is constructed to sense the liquid level of the water to be detected in the washing machine, and includes a housing 7, a pressure interface 72, a piezoelectric sensor, a mechanical interface 1 and an electrical interface 12, and a cover 71.

The pressure interface 72 is provided on the housing 7 and communicated with a flexible pressure transmission tube 8. One end of the pressure transmission tube 8 is communicated with an air chamber 401 of a container 400, the other end of the pressure transmission tube 8 is communicated with the pressure interface 72, so that the liquid level of the liquid, such as water, contained in the container 400 is converted to pressure in the pressure transmission tube 8. The piezoelectric sensor is provided in the housing 7 and constructed to sense a pressure inputted from the pressure interface 72 and convert a pressure variation into an electrical signal variation, to measure the liquid level of the liquid in the container 400. The mechanical interface 1 is provided at one side of the housing 7. The electrical interface 12 is provided at the other side of the housing 7 opposite to the one side and constructed to be electrically connected to a mating electrical interface (not shown) of an external controller 500 in a plug manner. The mounting mechanism 200 includes a mounting portion and a mating interface 2. The mounting portion is constructed to be detachably mounted on a support frame 300, such as an inner wall of a washing machine; and the mating interface 2 is provided on the mounting portion and constructed to be detachably engaged with the mechanical interface 1.

When it is needed to maintain or replace the sensor assembly 100, the electrical interface 12 of the sensor assembly 100 is disengaged with the mating electrical interface of the external controller 500, and the sensor assembly is directly pulled out from the mating interface of the mounting mechanism. After finishing the maintenance and replacement, the sensor assembly is mounted on the mounting mechanism, and the mating electrical interface of the external controller 500 is engaged to the electrical interface 12, thus facilitating the installation and detachment of the sensor assembly.

Referring to Figs. 1 and 3-7, in an embodiment, the mechanical interface 1 includes a plug portion 13 extending from the housing 7; and at least one limiting portion 11 provided on the plug portion 13 and constructed to be engaged with a mating limiting portion (not shown) in the mating interface 2 when the mechanical interface 1 is engaged with the mounting mechanism 200, to prevent the mechanical interface 1 from being disengaged from the mounting mechanism 200. The mating interface 2 includes a socket portion in a snap-fit relationship with the plug portion. In this way, the sensor assembly may be mounted on the mounting mechanism in a plug manner.

In an embodiment, the limiting portions 11 are formed as protrusions projecting from the plug portion 13, while the mating limiting portions are formed as grooves 22 mated with the limiting portions. With this arrangement, when the mechanical interface lis engaged with the mounting mechanism 200, the protrusion is bonded to the groove, resulting in that the mechanical interface 1 is engaged with the mating interface in a snap-fit fashion, meanwhile preventing the mechanical interface 1 from being disengaged from the mounting mechanism 200. In an alternative embodiment, the limiting portions 11 are formed as grooves concaving from the plug portion 13, while the mating limiting portions are formed as protrusions projecting from the inner of the mating interface.

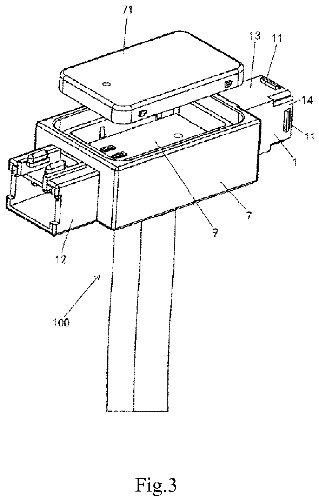

As shown in Fig. 3, an end of the plug portion 13 is formed with a plurality of first cantilevers 14 separated from each other, the limiting portions 11 being provided on the first cantilevers 14, respectively. In this way, during the engagement of the mechanical interface 1 with the mounting mechanism 200, the first cantilevers 14 contract inwardly due to the squeeze from the mating interface 2, so that it is convenient for the plug portion 13 of the mechanical interface 1 to move to the mating interface 2; and when the limiting portions 11 projecting from the first cantilevers 14 are engaged with the mating limiting portions concaving from the mating interface 2, the first cantilevers 14 return to their original shapes, thereby locking the mechanical interface 1 with the mounting mechanism 200.

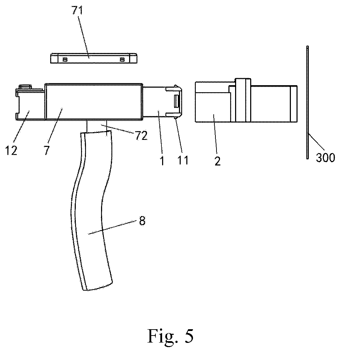

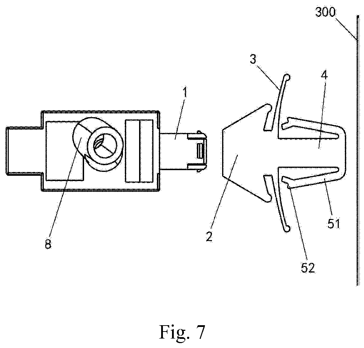

As shown in Figs. 1 and 4-7, in an embodiment, the mounting portion includes at least one holder 3, an insertion portion 4 and at least one locking portion 5. The insertion portion 4 is constructed to pass through the mounting through hole 301 formed in the support frame 300. The holder 3 extends outwardly radically from laterals of the mating interface 2. In the case that the mounting mechanism 200 is mounted on the support frame 300, the holder 3 becomes in contact with a surface around the mounting through hole 301 of the support frame 300 at the front of the support frame 300 (surface facing the sensor assembly or the left side surface of the support frame in Figs. 5 and 7). The locking portion 5 is provided on the insertion portion 4 and constructed to, under contraction, pass through the mounting through hole 301 of the support frame 300 together with the insertion portion 4, and under expansion, allow at least one part of the locking portion 5 to extend onto an edge of the mounting through hole 30 on the back of the support frame 300 (surface facing away from the sensor assembly or the right side surface of the support frame in Figs. 5 and 7). In this way, the locking portion 5 is capable of preventing the insertion portion 4 of the mounting mechanism 200 from dropping out from the mounting through hole 301, so that the mounting mechanism 200 and the sensor assembly 100 are reliably mounted on the support frame 300.

It is appreciated that Figs. 1 and 5-7 all illustrate the mounting mechanism 200 not being mounted on the support frame 300, while when the mounting mechanism 200 is mounted on the support frame 300, the locking portion 5 and part of the insertion portion 4 will be exposed from the right side of the support frame 300 as shown in Figs. 5 and 7.

In an embodiment, each locking portions 5 includes a second cantilever 51 and a protrusion portion 52. When the mounting mechanism 200 is mounted on the support frame 300, the second cantilever 51 obliquely extends toward the support frame 300 from an end of the insertion portion 4 (right end in Fig. 5); and the protrusion portion 52 is provided on the second cantilever 51, and constructed to, under contraction, passes through the mounting through hole 301 of the support frame 300 together with the second cantilever 51, and under expansion, extends onto the edge 302 of the mounting through hole 301 on the back of the support frame 300, such that the support frame 300 is sandwiched between the holder 3 and the protrusion portion 52. Such an arrangement is able to prevent the insertion portion 4 of the mounting mechanism 200 from dropping out from the mounting through hole 301, thereby reliably retaining the mounting mechanism 200 on the support frame 300. During detaching the mounting mechanism 200 from the support frame 300, a user may press the second cantilever 51 with hand to abut against the insertion portion 4, to pull out the insertion portion 4 from the mounting through hole 301.

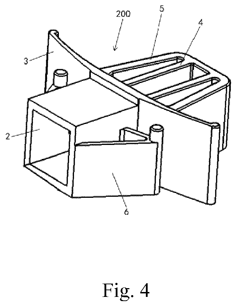

As shown in Figs. 4 and 7, the holder 3 obliquely extends toward the support frame 300 with respect to the mating interface 2, to cone into resilient contact with the surface around the mounting through hole 301 of the support frame 300. That is, when the mounting mechanism 200 is mounted on the support frame 300, the holder 3 deforms resiliently, so that the mounting mechanism 200 cannot shake relative to the support frame 300, improving the stability of the mounting mechanism 200.

As shown in Figs. 4 and 7, the mating interface 2 is provided with at least one support portion 6. When the mounting mechanism 200 is mounted on the support frame 300, the support portion 6 abuts against a front of the holder 3 (surface facing the sensor assembly or the left side surface of the support frame 300 in Figs. 5 and 7) to avoid the holder 3 having excessive deformation due to the pressure.

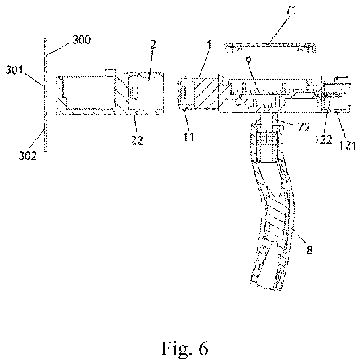

As shown in Figs. 3 and 6, in an embodiment, the electrical interface 12 includes a socket portion 121 and a plurality of connection terminals 122. The socket portion 121 extends from a side of the housing 7opposite to the mechanical interface 1. One end of each connection terminals 122 passes through the housing 7 and is electrically connected to the piezoelectric sensor, the other end of each connection terminals suspends in the socket portion 122 to be electrically connected with a mating connection terminal (not shown) of the mating electrical interface inserted into the socket portion 122. In this way, electrical signal generated by the piezoelectric sensor is transmitted to the external controller 500, an operation of the washing machine may be controlled according to the detected liquid level variation.

In an exemplary embodiment, the piezoelectric sensor includes a printed circuit board (PCB) 9 and a semiconductor strain gauge. The printed circuit board 9 is provided in the housing 7 and electrically connected with the connection terminal, and the pressure from the pressure interface 72 is acted on the printed circuit board 9. The semiconductor strain gauge is provided on the printed circuit board 9 with resistance value of the semiconductor strain gauge varying with the pressure inputted from the pressure interface 72. In an embodiment, the semiconductor strain gauge is provided at a position of the printed circuit board 9 which has the maximum surface stress to improve sensitivity.

In an exemplary embodiment, a piezoresistor is electrically connected to a bridge arm of Wheatstone bridge. With liquid level variation, the air pressure in the pressure transmission tube 8 varies, which results in variation in the resistance value of the semiconductor strain gauge. In this way, in the case that a input voltage in the Wheatstone bridge remains unchanged, a specific value of the detected liquid level may be determined by measuring the output voltage variation. The use of the Wheatstone bridge may improve measurement precision and reduce power dissipation to lower cost.

As shown in Fig. 1, the housing 7 is provided with a cover 71 for covering the piezoelectric sensor. The cover 71 covers the housing 7 to prevent dust and moisture from entering the housing 7 and being in contact with a piezoresistive element provided on the printed circuit board 99.

According to the sensor assembly and the liquid level detection device of the present disclosure, the piezoelectric sensor is mounted in the housing having the mechanical interface and the electrical interface, so that the sensor assembly is electrically connected to the mating electrical interface of the mounting mechanism in the plug manner. The mating interface of the mounting mechanism is detachably engaged with the mechanical interface of the sensor assembly for facilitating installing and detaching the sensor assembly. Moreover, when the mounting mechanism is mounted on the support frame, the mounting mechanism is locked on the support frame using a locking portion, such that the liquid level detection device and the mounting mechanism are reliably mounted on the support frame.

Although the above disclosure describes the embodiments that the liquid level detection device applied in the washing machine, the present disclosure is not limited to the exemplary embodiments. It should be appreciated that the liquid level detection device in the present disclosure may be used in other device requiring detecting liquid level. The mounting mechanism in the present disclosure may also detachably be installed to other components requiring many times of maintenances or replacements, in order to install and fix the component.

It should be appreciated by those skilled in this art that the above embodiments are intended to be illustrative, modifications may be made to the above embodiments by those skilled in this art, structures described in various embodiments may be freely combined without having structural or principle conflict, so that more kinds of sensor assembly and liquid level detection device will be obtained on the basis of solving the technical problem of the present disclosure.

After illustrating the preferred embodiments of the present disclosure in detail, the skilled person would appreciate that modifications and variations may be made without departing from the protection scope of the appendend claims, and that the present disclosure should not be limited to the approach of the exemplary embodiments illustrated by the specification. It should be noted that, the word "comprise" or "include" doesn't exclude other elements or steps. In addition, any reference numerals in the claims should not be interpreted as the limitation to the scope of the present invention.

## Claims

1. A sensor assembly (100), comprising:
a housing (7);
a pressure interface (72) provided on the housing (7) and communicated with a pressure transmission tube (8);
a sensor provided in the housing (7) and constructed to sense a pressure inputted from the pressure interface (72);
a mechanical interface (1) provided at one side of the housing (7) and constructed to be detachably engaged with a mounting mechanism (200); and
an electrical interface (12) provided at the other side of the housing (7) and constructed to be electrically connected to a mating electrical interface (12) in a plug manner, **characterised in that** the sensor is piezoelectric and **in that** the sensor assembly (100) further comprises a cover (71) covering the housing (7).

2. The sensor assembly (100) according to claim 1, wherein, the mechanical interface (1) comprises:
a plug portion (13) extending from the housing (7); and
at least one limiting portion (11) provided on the plug portion (13) to prevent the mechanical interface (1) from being disengaged from the mounting mechanism (200) when the mechanical interface (1) is engaged with the mounting mechanism (200).

3. The sensor assembly (100) according to claim 2, wherein, an end of the plug portion (13) is formed with a plurality of first cantilevers (14) separated from each other, the limiting portions (11) being provided on the first cantilevers (14), respectively.

4. The sensor assembly (100) according to claim 1, wherein, the electrical interface (12) comprises:
a socket portion (121) extending from a side of the housing (7) opposite to the mechanical interface (1); and
a plurality of connection terminals (122) each having one end passing through the housing (7) and electrically connected to the piezoelectric sensor and, the other end suspending in the socket portion (121) to be electrically connected with a mating connection terminal (122) of the mating electrical interface (12) inserted into the socket portion (121).

5. The sensor assembly (100) according to claim 4, wherein, the piezoelectric sensor comprises:
a printed circuit board (9) electrically connected with the connection terminal (122), the pressure inputted from the pressure interface (72) being acted on the printed circuit board (9); and
a semiconductor strain gauge provided on the printed circuit board (9), of which a resistance value is varied with the pressure inputted from the pressure interface (72).

6. The sensor assembly (100) according to claim 5, wherein, the semiconductor strain gauge is electrically connected to a bridge arm of Wheatstone bridge.

7. A liquid level detection device, comprising:
a sensor assembly (100) according to claim 1; and
a mounting mechanism (200) comprising:
a mounting portion constructed to be detachably mounted on a support frame (300); and
a mating interface (2) provided on the mounting portion and constructed to be detachably engaged with the mechanical interface (1).

8. The liquid level detection device according to claim 7, further comprises a pressure transmitting tube (8) having one end communicated with a container (400) receiving liquid to be measured, and the other end communicated with the pressure interface (72), so that the pressure in the pressure transmitting tube (8) is varied with the liquid level of the liquid to be measured.

9. The liquid level detection device according to claim 7, wherein, the mechanical interface (1) comprises:
a plug portion (13) extending from the housing (7) and constructed to be inserted into the mating interface (2); and
at least one limiting portion (11) provided on the plug portion (13) and constructed to be engaged with a mating limiting portion provided in the mating interface (2) when the mechanical interface (1) is engaged with the mounting mechanism (200), to prevent the mechanical interface (1) from being disengaged from the mounting mechanism (200).

10. The liquid level detection device according to claim 9, wherein, one of the limiting portion (11) and the mating limiting portion is formed as a protrusion, and the other one of the limiting portion (11) and the mating limiting portion is formed as a groove mating with the protrusion.

11. The liquid level detection device according to claim 10, wherein, an end of the plug portion (13) is formed with a plurality of first cantilevers (14) separated from each other, the limiting portions (11) being provided on the first cantilevers (14), respectively.

12. The liquid level detection device according to claim 7, wherein, the mounting portion comprises:
an insertion portion (4) constructed to pass through the mounting through hole (301) formed on the support frame (300);
at least one holder (3) extending outwardly radically from laterals of the mating interface (2) to be in contact with a surface around the mounting through hole (301) on the front of the support frame (300); and
at least one locking portion (5) provided on the insertion portion (4) and constructed to, under contraction, pass through the mounting through hole (301) together with the insertion portion (4), and under expansion, allow at least one part of the locking portion (5) to extend onto an edge of the mounting through hole (301) on the back of the support frame (300).

13. The liquid level detection device according to claim 12, wherein, each locking portion (5) comprises:
a second cantilever (51) obliquely extending toward the support frame (300) from an end of the insertion portion (4); and
a protrusion portion provided on the second cantilever (51) and constructed to, under contraction, passes through the mounting through hole (301) together with the second cantilever (51), and under expansion, extends onto an edge of the mounting through hole (301) on the back of the support frame (300), such that the support frame (300) is sandwiched between the holder (3) and the protrusion portion.

14. The liquid level detection device according to claim 12, wherein, the holder (3) obliquely extends toward the support frame (300) with respect to the mating interface (2), to be in resilient contact with the surface around the mounting through hole (301).

15. The liquid level detection device according to claim 14, wherein, the mating interface (2) is provided with at least one support portion (6) abutting against the front of the holder (3) to avoid the holder (3) having excessive deformation.

## Patentansprüche

1. Sensoranordnung (100), umfassend:
ein Gehäuse (7);
eine Druck-Schnittstelle (72), die an dem Gehäuse (7) vorhanden ist und mit einem Druck-Übertragungsrohr (8) in Verbindung steht;
einen Sensor, der in dem Gehäuse (7) vorhanden und so konstruiert ist, dass er einen über die Druck-Schnittstelle (72) eingeleiteten Druck erfasst;
eine mechanische Schnittstelle (1), die an einer Seite des Gehäuses (7) vorhanden und so konstruiert ist, dass sie lösbar mit einem Anbringungsmechanismus (200) in Eingriff ist; und
eine elektrische Schnittstelle (12), die an der anderen Seite des Gehäuses (7) vorhanden und so konstruiert ist, dass sie mit einer elektrischen Gegenschnittstelle (12) elektrisch in Steckverbindung ist, **dadurch gekennzeichnet, dass** der Sensor piezoelektrisch ist und dass die Sensoranordnung (100) des Weiteren eine das Gehäuse (7) abdeckende Abdeckung (71) umfasst.

2. Sensoranordnung (100) nach Anspruch 1, wobei die mechanische Schnittstelle (1) umfasst:
einen Stecker-Abschnitt (13), der sich von dem Gehäuse (7) aus erstreckt; und
wenigstens einen Begrenzungs-Abschnitt (11), der an dem Stecker-Abschnitt (13) vorhanden ist, um zu verhindern, dass die mechanische Schnittstelle (1) von dem Anbringungsmechanismus (200) gelöst wird, wenn die mechanische Schnittstelle (1) mit dem Anbringungsmechanismus (200) in Eingriff ist.

3. Sensoranordnung (100) nach Anspruch 2, wobei ein Ende des Stecker-Abschnitts (13) mit einer Vielzahl erster Ausleger (14) versehen ist, die voneinander getrennt sind, wobei die Begrenzungs-Abschnitte (11) jeweils an den ersten Auslegern (14) vorhanden sind.

4. Sensoranordnung (100) nach Anspruch 1, wobei die elektrische Schnittstelle (12) umfasst:
einen Buchsen-Abschnitt (121), der sich von einer der mechanischen Schnittstelle (1) gegenüberliegenden Seite des Gehäuses (7) aus erstreckt; und
eine Vielzahl von Verbindungsanschlüssen (122), die jeweils ein Ende haben, das durch das Gehäuse (7) hindurchtritt und elektrisch mit dem piezoelektrischen Sensor verbunden ist, und wobei das andere Ende zum elektrischen Verbinden mit einem in den Buchsen-Abschnitt (121) eingeführten Gegen-Verbindungsanschluss (122) der elektrischen Gegenschnittstelle (12) schwebend in dem Buchsen-Abschnitt (121) angeordnet ist.

5. Sensoranordnung (100) nach Anspruch 4, wobei der piezoelektrische Sensor umfasst:
eine Leiterplatte (9), die elektrisch mit dem Verbindungsanschluss (122) verbunden ist, wobei der über die Druck-Schnittstelle (72) eingeleitete Druck auf die Leiterplatte (9) ausgeübt wird; und
einen an der Leiterplatte (9) vorhandenen Halbleiter-Dehnungsmessstreifen, dessen Widerstandswert sich mit dem über die Druck-Schnittstelle (72) eingeleiteten Druck ändert.

6. Sensoranordnung (100) nach Anspruch 5, wobei der Halbleiter-Dehnungsmessstreifen elektrisch mit einem Brückenzweig einer Wheatstone-Brücke verbunden ist.

7. Vorrichtung zur Erfassung eines Flüssigkeitspegels, umfassend:
eine Sensoranordnung (100) nach Anspruch 1; und
einen Anbringungsmechanismus (200), umfassend:
einen Anbringungs-Abschnitt, der so konstruiert ist, dass er abnehmbar an einem Tragerahmen (300) angebracht ist; und
eine Gegen-Schnittstelle (2), die an dem Anbringungs-Abschnitt vorhanden und so konstruiert ist, dass sie lösbar mit der mechanischen Schnittstelle (1) in Eingriff ist.

8. Vorrichtung zur Erfassung eines Flüssigkeitspegels nach Anspruch 7, die des Weiteren ein Druck-Übertragungsrohr (8) umfasst, dessen eines Ende mit einem Behälter (400) in Verbindung steht, der zu messende Flüssigkeit aufnimmt, und dessen anderes Ende so mit der Druck-Schnittstelle (72) in Verbindung steht, dass sich der Druck in dem Druck-Übertragungsrohr (8) mit dem Flüssigkeitspegel der zu messenden Flüssigkeit ändert.

9. Vorrichtung zur Erfassung eines Flüssigkeitspegels nach Anspruch 7, wobei die mechanische Schnittstelle (1) umfasst:
einen Stecker-Abschnitt (13), der sich von dem Gehäuse (7) aus erstreckt und so konstruiert ist, dass er in die Gegen-Schnittstelle (2) eingeführt wird; und
wenigstens einen Begrenzungs-Abschnitt (11), der an dem Stecker-Abschnitt (13) vorhanden und so konstruiert ist, dass er mit einem Gegen-Begrenzungs-Abschnitt, der in der Gegen-Schnittstelle (2) vorhanden ist, in Eingriff ist, wenn die mechanische Schnittstelle (1) mit dem Anbringungsmechanismus (200) in Eingriff ist, um zu verhindern, dass die mechanische Schnittstelle (1) von dem Anbringungsmechanismus (200) gelöst wird.

10. Vorrichtung zur Erfassung eines Flüssigkeitspegels nach Anspruch 9, wobei der Begrenzungs-Abschnitt (11) oder der Gegen-Begrenzungs-Abschnitt als ein Vorsprung ausgebildet ist und der andere von dem Begrenzungs-Abschnitt (11) und dem Gegen-Begrenzungs-Abschnitt als eine Nut ausgebildet ist, die mit dem Vorsprung in Passung ist.

11. Vorrichtung zur Erfassung eines Flüssigkeitspegels nach Anspruch 10, wobei ein Ende des Stecker-Abschnitts (13) mit einer Vielzahl erster Ausleger (14) versehen ist, die voneinander getrennt sind, und die Begrenzungs-Abschnitte (11) jeweils an den ersten Auslegern (14) vorhanden sind.

12. Vorrichtung zur Erfassung eines Flüssigkeitspegels nach Anspruch 7, wobei der Anbringungs-Abschnitt umfasst:
einen Einführungs-Abschnitt (4), der so konstruiert ist, dass er durch das an dem Tragerahmen (300) ausgebildete Anbringungs-Durchgangsloch (301) hindurchtritt;
wenigstens einen Halter (3), der sich von den Seiten der Gegen-Schnittstelle (2) radial so nach außen erstreckt, dass er mit einer Fläche um das Anbringungs-Durchgangsloch (301) herum an der Vorderseite des Tragerahmens (300) in Kontakt ist; und
wenigstens einen Arretier-Abschnitt (5), der an dem Einführungs-Abschnitt (4) vorhanden und so konstruiert ist, dass er bei Kontraktion zusammen mit dem Einführungs-Abschnitt (4) durch das Anbringungs-Durchgangsloch (301) hindurchtritt und bei Expansion zulässt, dass sich wenigstens ein Teil des Arretier-Abschnitts (5) zu einem Rand des Anbringungs-Durchgangslochs (301) an der Rückseite des Tragerahmens (300) erstreckt.

13. Vorrichtung zur Erfassung eines Flüssigkeitspegels nach Anspruch 12, wobei jeder Arretier-Abschnitt (5) umfasst:
einen zweiten Ausleger (51), der sich von einem Ende des Einführungs-Abschnitts (4) schräg auf den Tragerahmen (300) zu erstreckt; und
einen Vorsprungs-Abschnitt, der an dem zweiten Ausleger (51) vorhanden und so konstruiert ist, dass er bei Kontraktion zusammen mit dem zweiten Ausleger (51) durch das Anbringungs-Durchgangsloch (301) hindurchtritt und sich bei Expansion zu einem Rand des Anbringungs-Durchgangslochs (301) an der Rückseite des Tragerahmens (300) erstreckt, so dass der Tragerahmen (300) zwischen dem Halter (3) und dem Vorsprungs-Abschnitt eingeschlossen ist.

14. Vorrichtung zur Erfassung eines Flüssigkeitspegels nach Anspruch 12, wobei sich der Halter (3) in Bezug auf die Gegen-Schnittstelle (2) schräg so auf den Tragerahmen (300) zu erstreckt, dass er in elastischem Kontakt mit der Oberfläche um das Anbringungs-Durchgangsloch (301) herum ist.

15. Vorrichtung zur Erfassung eines Flüssigkeitspegels nach Anspruch 14, wobei die Gegen-Schnittstelle (2) mit wenigstens einem Trage-Abschnitt (6) versehen ist, der an der Vorderseite des Halters (3) anliegt, um zu starke Verformung des Halters (3) zu vermeiden.

## Revendications

1. Ensemble capteur (100), comprenant:
un logement (7);
une interface de pression (72) prévue sur le boîtier (7) et communiquant avec un tube de transmission de pression (8);
un capteur prévu dans le boîtier (7) et construit pour détecter une pression entrée à partir de l'interface de pression (72);
une interface mécanique (1) prévue sur un côté du boîtier (7) et construite pour s'engager de manière amovible dans un mécanisme de montage (200); et
une interface électrique (12) prévue de l'autre côté du boîtier (7) et conçue se connecter électriquement à une interface électrique correspondante (12) à la manière d'une fiche, **caractérisée en ce que** le capteur est piézoélectrique et **en ce que** l'ensemble de capteur (100) comprend en outre un couvercle (71) recouvrant le boîtier (7).

2. Ensemble capteur (100) selon la revendication 1, dans lequel l'interface mécanique (1) comprend:
une partie fiche (13) s'étendant à partir du boîtier (7); et
au moins une partie limitation (11) prévue sur la partie fiche (13) pour empêcher que l'interface mécanique (1) ne se dégage du mécanisme de montage (200) lorsque l'interface mécanique (1) s'engage dans le mécanisme de montage (200).

3. Ensemble de capteur (100) selon la revendication 2, dans lequel une extrémité de la partie fiche (13) est constituée d'une pluralité de premiers porte-à-faux (14) séparés les uns des autres, les parties limitation (11) étant prévues sur les premiers porte-à-faux (14), respectivement.

4. Ensemble capteur (100) selon la revendication 1, dans lequel l'interface électrique (12) comprend:
une partie douille (121) s'étendant d'un côté du boîtier (7) opposé à l'interface mécanique (1); et
une pluralité de bornes de connexion (122) présentant chacune une extrémité passant à travers le boîtier (7) et connectée électriquement au capteur piézoélectrique et, l'autre extrémité étant suspendue dans la partie douille (121) pour être connectée électriquement à une borne de connexion correspondante (122) de l'interface électrique correspondante (12) insérée dans la partie douille (121).

5. Ensemble capteur (100) selon la revendication 4, dans lequel le capteur piézoélectrique comprend:
une carte de circuit imprimé (9) reliée électriquement à la borne de connexion (122), la pression entrée par l'interface de pression (72) agissant sur la carte de circuit imprimé (9); et
une jauge de contrainte à semi-conducteur prévue sur la carte de circuit imprimé (9), dont la valeur de résistance varie en fonction de la pression entrée par l'interface de pression (72).

6. Ensemble capteur (100) selon la revendication 5, dans lequel la jauge de contrainte à semi-conducteur est électriquement connectée à un bras du pont de Wheatstone.

7. Dispositif de détection du niveau de liquide, comprenant:
un ensemble capteur (100) selon la revendication 1; et
un mécanisme de montage (200) comprenant:
une partie montage construite pour être montée de manière amovible sur un cadre de support (300)
une interface d'accouplement (2) prévue sur la partie montage et construite pour s'engager de manière détachable dans l'interface mécanique (1).

8. Dispositif de détection de niveau de liquide selon la revendication 7, comprend en outre un tube de transmission de pression (8) ayant une extrémité communiquant avec un récipient (400) recevant le liquide à mesurer, et l'autre extrémité communiquant avec l'interface de pression (72), de sorte que la pression dans le tube de transmission de pression (8) varie avec le niveau de liquide du liquide à mesurer.

9. Dispositif de détection du niveau de liquide selon la revendication 7, dans lequel l'interface mécanique (1) comprend
une partie fiche (13) s'étendant à partir du boîtier (7) et construite pour être insérée dans l'interface d'accouplement (2); et
au moins une partie de limitation (11) prévue sur la partie fiche (13) et construite s'engager dans une partie limitation d'accouplement prévue dans l'interface d'accouplement (2) lorsque l'interface mécanique (1) est engagée dans le mécanisme de montage (200), pour empêcher l'interface mécanique (1) de se dégager du mécanisme de montage (200).

10. Dispositif de détection de niveau de liquide selon la revendication 9, dans lequel l'une des parties limitation (11) et la partie limitation correspondante est formée comme une saillie, et l'autre partie limitation (11) et la partie limitation correspondante est formée comme une rainure s'adaptant à la saillie.

11. Dispositif de détection de niveau de liquide selon la revendication 10, dans lequel une extrémité de la partie fiche (13) est constituée d'une pluralité de premiers porte-à-faux (14) séparés les uns des autres, les parties limitation (11) étant prévues sur les premiers porte-à-faux (14), respectivement.

12. Dispositif de détection du niveau de liquide selon la revendication 7, dans lequel la partie de montage comprend:
une partie insertion (4) construite pour passer à travers le trou traversant de montage (301) formé sur le cadre de support (300);
au moins un support (3) s'étendant radicalement vers l'extérieur à partir des côtés de l'interface d'accouplement (2) pour être en contact avec une surface autour du trou traversant de montage (301) sur l'avant du cadre de support (300); et
au moins une partie verrouillage (5) prévue sur la partie insertion (4) et construite pour, sous contraction, passer à travers le trou traversant de montage (301) en même temps que la partie insertion (4), et sous expansion, permettre à au moins une partie de la partie verrouillage (5) de s'étendre sur un bord du trou traversant de montage (301) au dos du cadre de support (300).

13. Dispositif de détection de niveau de liquide selon la revendication 12, dans lequel chaque partie de verrouillage (5) comprend:
un second porte-à-faux (51) s'étendant obliquement vers le cadre de support (300) à partir d'une extrémité de la partie insertion (4); et
une partie en saillie prévue sur le second porte-à-faux (51) et construite pour, sous contraction, passer à travers le trou de montage traversant (301) avec le second porte-à-faux (51), et sous expansion, s'étendre sur un bord du trou de montage traversant (301) à l'arrière du cadre de support (300), de sorte que le cadre de support (300) est pris en sandwich entre le support (3) et la partie en saillie.

14. Dispositif de détection de niveau de liquide selon la revendication 12, dans lequel le support (3) s'étend obliquement vers le cadre de support (300) par rapport à l'interface d'accouplement (2), pour être en contact élastique avec la surface autour du trou traversant de montage (301).

15. Dispositif de détection de niveau de liquide selon la revendication 14, dans lequel l'interface d'accouplement (2) est munie d'au moins une partie support (6) en butée contre l'avant du support (3) pour éviter que le support (3) ne subisse une déformation excessive.
